# EUROPEAN PATENT APPLICATION

(11) **EP 4 835 418 A1**
(43) Date of publication of application: **04.11.2026**
(21) Application number: 25188707.1
(22) Date of filing: 10.07.2025
(51) Int. Cl.: G01J 5/00, G01J 5/07, G01J 5/0806, G01J 5/0808, G01J 5/08

(54) **LONG DISTANCE PASSIVE INFRARED SENSING DEVICE AND LIGHTING SYSTEM USING THE SAME**

(30) Priority: 30.04.2025 CN 202520853736 U; 30.04.2025 CN 202520853835 U
(71) Applicant: Edison Opto Corporation, New Taipei City (TW)
(72) Inventor: XIE, Long, New Taipei City (TW); WANG, Hung-Chan, New Taipei City (TW); ZHANG, Chun-Zhi, New Taipei City (TW)
(74) Representative: Winter, Brandl - Partnerschaft mbB

(57) **Abstract**

A long distance passive infrared (PIR) sensing device includes a **PIR** sensor, an amplifier, a comparator, and a reflective cup. **The** amplifier is electrically connected to the **PIR** sensor. **The** comparator is electrically connected to the amplifier. **The** reflective cup is adjacent to the **PIR** sensor. **The** outer surface of the reflective cup is a reflective surface. **The** reflective surface of the reflective cup is configured to reflect infrared rays to the **PIR** sensor. When a human body at a long distance emits infrared rays with a wavelength of about 10µm, the reflective cup can be used as a component to collect signals, enhance signal strength and improve sensing distance.

## Description

### BACKGROUND

### Field of Invention

The present disclosure relates to a passive infrared (PIR) sensing device, especially relates to a long distance passive infrared (PIR) sensing device.

### Description of Related Art

A passive infrared sensor (PIR) is a sensor that can be used for lighting control. It can receive infrared rays within a specific wavelength range, thereby affecting the pyroelectric element of the sensor to generate an electric potential difference signal.

The human body has a constant body temperature, generally about 37 degrees, so the human body can emit infrared rays with a specific wavelength of about 10µm. The passive infrared sensor can detect the 10µm infrared rays emitted by the human body. When the pyroelectric element receives infrared radiation from the human body to form temperature changes, it loses charge balance and releases the charge to the outside, and the subsequent circuit can generate a signal after detection and processing. However, the sensing distance of the passive infrared sensor is about 8 meters to 12 meters, which is not conducive to long-distance applications. Moreover, the sensing angle of the passive infrared sensor is less than or equal to 180 degrees, which is not conducive to ultra-wide-angle applications.

### SUMMARY

According to some embodiments of the present disclosure, a long distance passive infrared (PIR) sensing device includes a PIR sensor, an amplifier, a comparator, and a reflective cup. The amplifier is electrically connected to the PIR sensor. The comparator is electrically connected to the amplifier. The reflective cup is adjacent to the PIR sensor. The outer surface of the reflective cup is a reflective surface. The reflective surface of the reflective cup is configured to reflect infrared rays to the PIR sensor.

In some embodiments, the long distance PIR sensing device further includes a Fresnel lens covering the PIR sensor and the reflective cup.

In some embodiments, the long distance PIR sensing device further includes a printed circuit board. The PIR sensor, the amplifier, and the comparator are located on the printed circuit board.

In some embodiments, the long distance PIR sensing device further includes a cover covering the printed circuit board and having a signal output port, wherein the PIR sensor outputs a signal from the signal output port.

In some embodiments, the reflective cup is located on the cover, and a bottom of the reflective cup is adjacent to the PIR sensor.

In some embodiments, the bottom of the reflective cup is located between an opening of the reflective cup and the PIR sensor.

In some embodiments, the reflective cup has two sidewalls opposite to each other and extending from the bottom of the reflective cup, and an obtuse angle is formed between each of the two sidewalls and the bottom of the reflective cup.

In some embodiments, the PIR sensor has a rectangular sensing area.

In some embodiments, a long side of the rectangular sensing area is parallel to a radial direction of the reflective cup.

In some embodiments, a short side of the rectangular sensing area is parallel to an axial direction of the reflective cup.

In some embodiments, the PIR sensor is a first PIR sensor, and the long distance PIR sensing device further includes two second PIR sensors and a printed circuit board. The printed circuit board has a first surface and a second surface opposite to the first surface. The first PIR sensor is located on the first surface of the printed circuit board and has a first sensing area. The two second PIR sensors are located on the second surface of the printed circuit board and adjacent to each other. Each of the two second PIR sensors has a second sensing area. A normal direction of the first sensing area and two normal directions of the two second sensing areas are different from each other.

In some embodiments, the long distance PIR sensing device further includes a Fresnel lens covering the printed circuit board, the first PIR sensor, and the two second PIR sensors.

In some embodiments, the two normal directions of the two second sensing areas are perpendicular to each other.

In some embodiments, the normal direction of the first sensing area is perpendicular to the two normal directions of the two second sensing areas.

In some embodiments, the normal direction of the first sensing area is perpendicular to the printed circuit board.

In some embodiments, the two normal directions of the two second sensing areas are parallel to the printed circuit board.

In some embodiments, the printed circuit board has a first edge and a second edge opposite to the first edge, and the first PIR sensor is closer to the first edge of the printed circuit board than the two second PIR sensors.

In some embodiments, the two second PIR sensors are adjacent to the second edge of the printed circuit board.

According to some embodiments of the present disclosure, a lighting system using the aforementioned long distance passive infrared (PIR) sensing device.

In the aforementioned embodiments of the present disclosure, since the long distance PIR sensing device has the reflective cup adjacent to the PIR sensor, infrared rays can be reflected to the PIR sensor by the outer surface of the reflective cup when a human body at a long distance emits infrared rays with a wavelength of about 10µm. In other words, the reflective cup can be used as a component to collect signals, enhance signal strength and improve sensing distance. In use, the reflective cup collects infrared rays and the infrared rays are focused on the PIR sensor. Thereafter, signals can be amplified by the amplifier, and the signals are compared and filtered through the comparator, thereby sending signals that can be received by a lamp. Through the aforesaid configuration, the long distance PIR sensing device can increase a sensing distance to more than 35 meters.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
Fig. 1 is a perspective view of a long distance PIR sensing device according to one embodiment of the present disclosure.
Fig. 2 is a front view of the long distance PIR sensing device of Fig. 1, in which a Fresnel lens and a casing are removed.
Fig. 3 is a block diagram of the long distance PIR sensing device of Fig. 2.
Figs. 4 to 6 are schematic views of light paths when the reflective cup of Fig. 2 reflects infrared rays to a PIR sensor.
Fig. 7 is a schematic view of signal transmission when the long distance PIR sensing device of Figs. 1 and 2 is in use.
Fig. 8A is a circuit diagram of a voltage stabilized power supply circuit according to one embodiment of the present disclosure.
Fig. 8B is a circuit diagram of the PIR sensor and a microcontroller unit (MCU) according to one embodiment of the present disclosure.
Fig. 9A is a detailed circuit diagram of the PIR sensor of Fig. 8B.
Fig. 9B shows components included in the microcontroller unit of Fig. 8B.
Fig. 10 is a distance detection data distribution map of the long distance PIR sensing device of Figs. 1 and 2.
Fig. 11 is a block diagram of a lighting system according to one embodiment of the present disclosure.
Fig. 12 is a perspective view of an ultra wide angle PIR sensing device according to another embodiment of the present disclosure, in which the Fresnel lens and the casing are removed.
Fig. 13 is a top view of the ultra wide angle PIR sensing device of Fig. 12.
Fig. 14 is a block diagram of the ultra wide angle PIR sensing device of Fig. 12.
Fig. 15 is a schematic view of signal transmission when the ultra wide angle PIR sensing device of Figs. 1 and 12 is in use.
Fig. 16A is a circuit diagram of a voltage stabilized power supply circuit according to one embodiment of the present disclosure.
Fig. 16B is a circuit diagram of a first PIR sensor, second PIR sensors, and a microcontroller unit (MCU) according to one embodiment of the present disclosure.
Fig. 17A is a detailed circuit diagram of the first PIR sensor and the second PIR sensors of Fig. 16B.
Fig. 17B shows components included in the microcontroller unit of Fig. 16B.
Fig. 18 is an angle detection data distribution map of the ultra wide angle PIR sensing device of Figs. 1 and 12.

### DETAILED DESCRIPTION

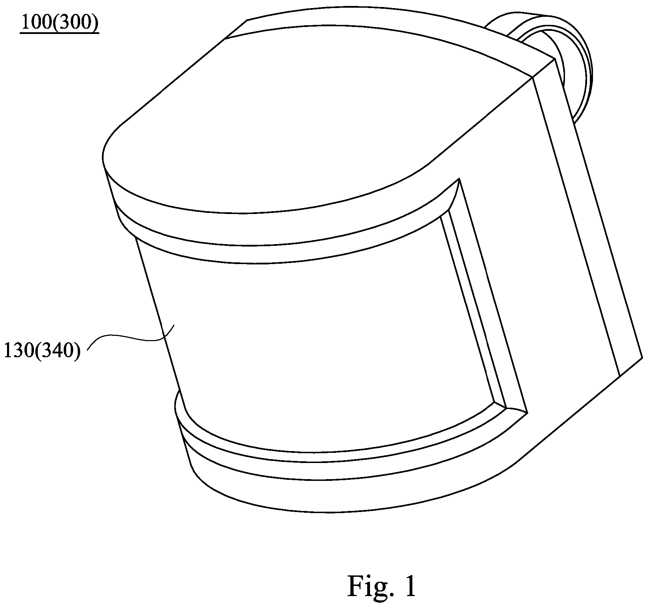

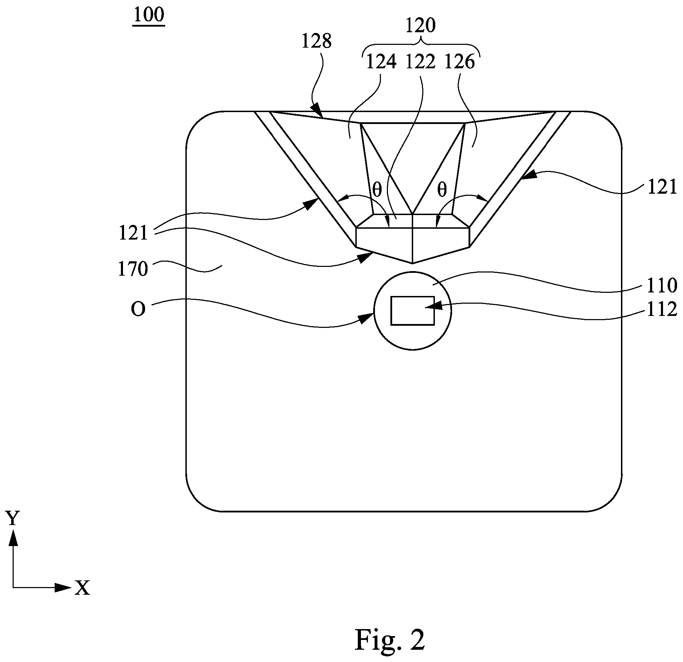

Fig. 1 is a perspective view of a long distance passive infrared (PIR) sensing device 100 according to one embodiment of the present disclosure. Fig. 2 is a front view of the long distance PIR sensing device 100 of Fig. 1, in which a Fresnel lens 130 and a casing are removed. As shown in Fig. 1 and Fig. 2, the long distance PIR sensing device 100 includes a PIR sensor 110, a reflective cup 120, and the Fresnel lens 130. The Fresnel lens 130 covers the PIR sensor 110 and the reflective cup 120. The reflective cup 120 is adjacent to the PIR sensor 110, such as the reflective cup 120 of Fig. 2 is located at the upper side of the PIR sensor 110. The outer surface of the reflective cup 120 is a reflective surface 121. When infrared rays passes through the Fresnel lens 130 to enter the long distance PIR sensing device 100, the reflective surface 121 of the reflective cup 120 can reflect the infrared rays to the PIR sensor 110.

A human body has a body temperature generally about 37 degrees, so the human body can emit infrared rays with a wavelength of about 10µm. After the infrared rays passes through the Fresnel lens 130 to enhance, the infrared rays may be reflected to the reflective surface 121 of the reflective cup 120, thereby collecting to the PIR sensor 110. The PIR sensor 110 is a pyroelectric element that is sensitive to infrared radiation with the wavelength of 10µm. The PIR sensor 110 loses charge balance when receiving the infrared radiation of the human body to change temperature, thereby releasing charges to the outside. Therefore, the subsequent circuit after detection and processing can generate a signal. The reflective cup 120 may receive radiated signals from different angles and distances (e.g., infrared rays).

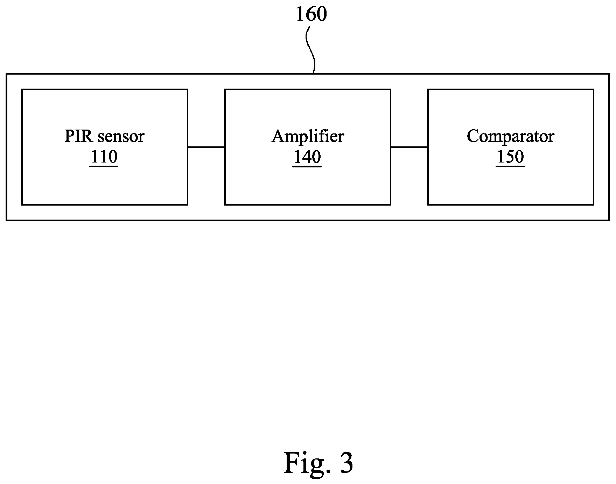

Fig. 3 is a block diagram of the long distance PIR sensing device 100 of Fig. 2. As shown in Fig. 2 and Fig. 3, the long distance PIR sensing device 100 includes an amplifier 140 and a comparator 150. The amplifier 140 is electrically connected to the PIR sensor 110, and the comparator 150 is electrically connected to the amplifier 140. Infrared rays can be focused by the reflective cup 120 and received by the PIR sensor 110, and the amplifier 140 is utilized to amplify signals and the comparator 150 is utilized to perform signal comparison and filtering, thereby sending signals that can be received by a lamp.

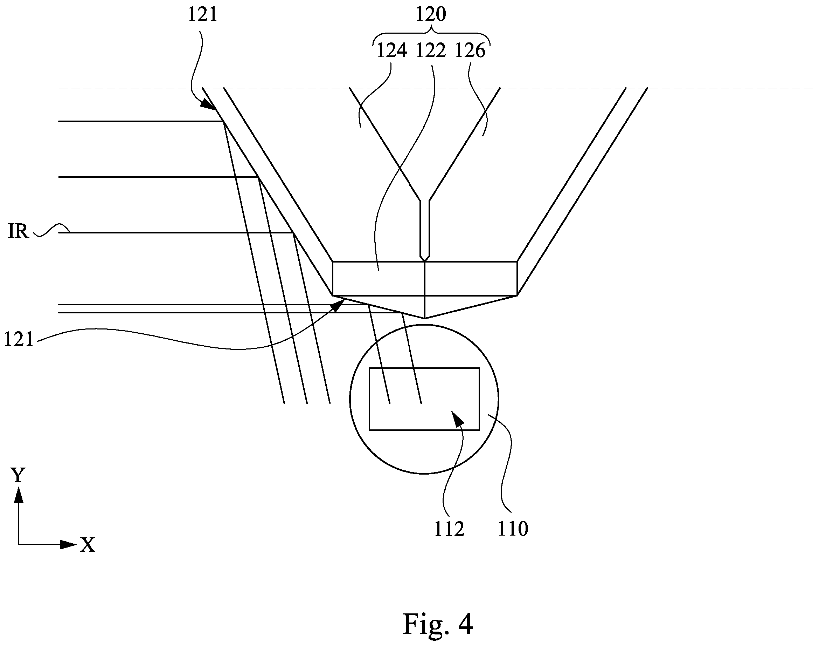

In addition, the long distance PIR sensing device 100 further includes a printed circuit board 160 and a cover 170. The PIR sensor 110, the amplifier 140, and the comparator 150 are located on the printed circuit board 160. The cover 170 covers the printed circuit board 160 and has a signal output port O, such that the PIR sensor 110 may output a signal from the signal output port O. In Fig. 2, the printed circuit board 160 is not shown due to the coverage of the cover 170 (overlapping). The reflective cup 120 is located on the cover 170, and the bottom 122 of the reflective cup 120 is adjacent to the PIR sensor 110. The bottom 122 of the reflective cup 120 is located between an opening 128 of the reflective cup 120 and the PIR sensor 110. The reflective cup 120 has two sidewalls 124 and 126 opposite to each other and extending from the bottom 122, and an obtuse angle θ is formed between each of the two sidewalls 124 and 126 and the bottom 122 of the reflective cup 120. In such a design of the reflective cup 120, infrared rays can be reflected toward the PIR sensor 110 (to be described in Figs. 4 to 6). Moreover, the reflective cup 120 has different heights and angles, which may change sensing distance and sensing range for infrared rays.

In some embodiments, the PIR sensor 110 has a rectangular sensing area 112. The long side of the rectangular sensing area 112 is parallel to the radial direction of the reflective cup 120 (e.g., a direction X), and the short side of the rectangular sensing area 112 is parallel to the axial direction of the reflective cup 120 (e.g., a direction Y). In some embodiments, the rectangular sensing area 112 can detect the angle range of about 138 degrees along the direction X, and can detect the angle range of about 125 degrees along the direction Y.

It is to be noted that the connection relationships, the materials, and the advantages of the elements described above will not be repeated in the following description. In the following description, the states of light paths when the long distance PIR sensing device 100 is in operation will be explained.

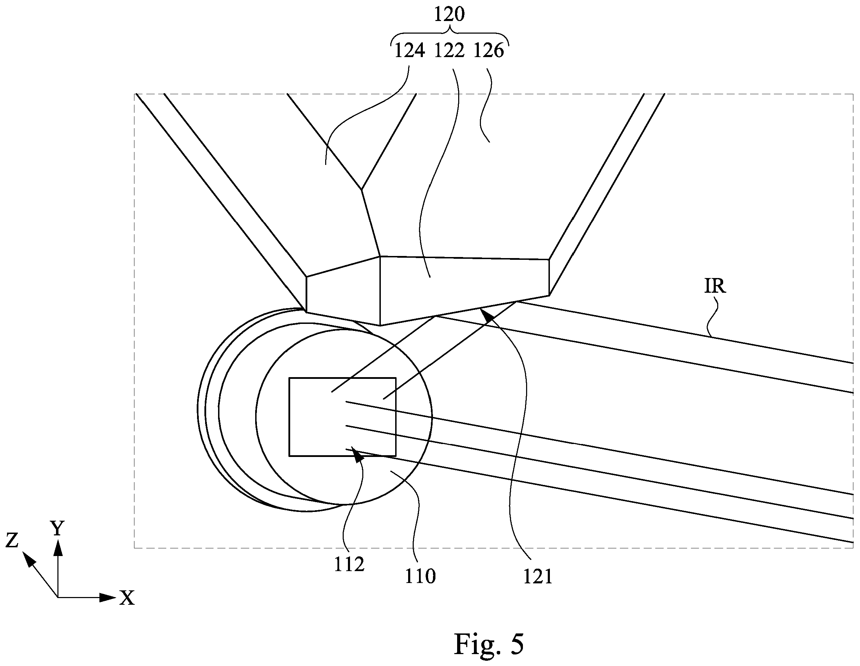

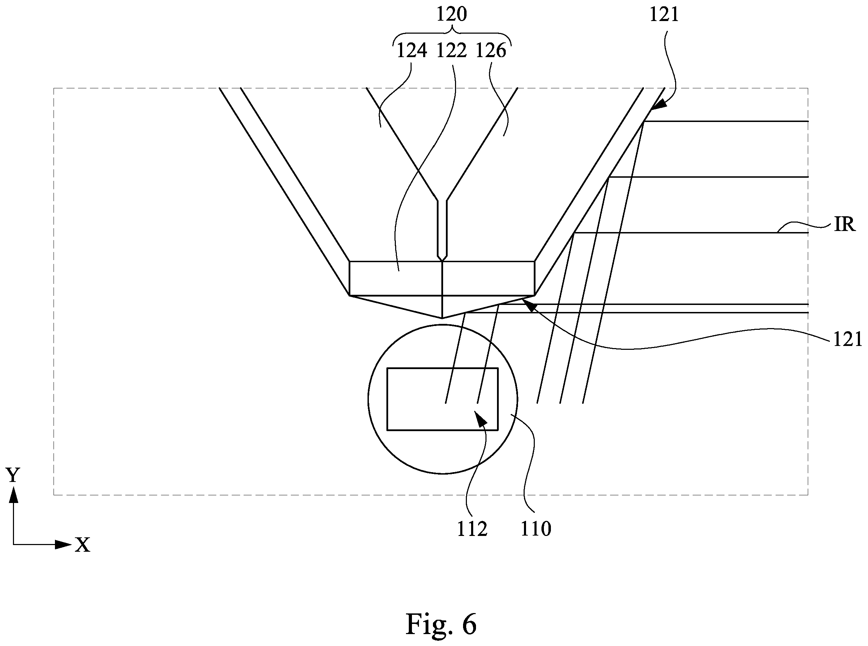

Figs. 4 to 6 are schematic views of light paths when the reflective cup 120 of Fig. 2 reflects infrared rays IR to the PIR sensor 110. As shown in Fig. 6, after the infrared rays IR pass through the Fresnel lens 130 of Fig. 1, the infrared rays IR may be reflected by the reflective surface 121 of the sidewall 124 on the left side of the reflective cup 120, and is received by the rectangular sensing area 112 of the PIR sensor 110. As shown in Fig. 5, after the infrared rays IR pass through the Fresnel lens 130 of Fig. 1, the infrared rays IR may be reflected by the reflective surface 121 of the bottom 122 on the bottom side of the reflective cup 120, and is received by the rectangular sensing area 112 of the PIR sensor 110. The infrared rays IR may also directly enter the rectangular sensing area 112 of the PIR sensor 110. As shown in Fig. 6, after the infrared rays IR pass through the Fresnel lens 130 of Fig. 1, the infrared rays IR may be reflected by the reflective surface 121 of the sidewall 126 on the right side of the reflective cup 120, and is received by the rectangular sensing area 112 of the PIR sensor 110.

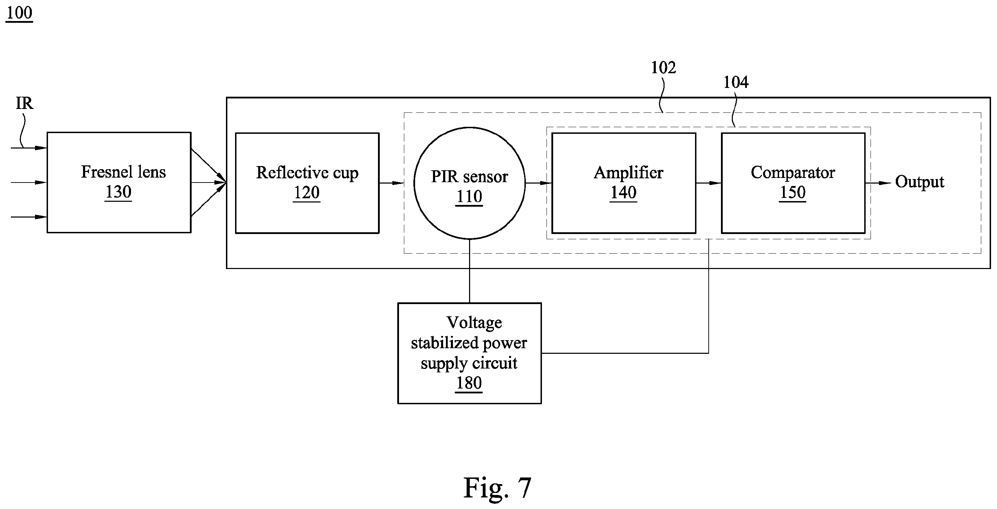

Fig. 7 is a schematic view of signal transmission when the long distance PIR sensing device 100 of Figs. 1 and 2 is in use. First, the infrared rays IR with the wavelength of about 10µm may be formed by a human body, and then the infrared rays IR pass through the Fresnel lens 130 to reduce the interference from ambient light, thereby enhancing thermal radiation signals (i.e., the infrared rays IR) and refracting the thermal radiation signals to the reflective cup 120. Since the long distance PIR sensing device 100 has the reflective cup 120 adjacent to the PIR sensor 110, the infrared rays IR can be reflected to the PIR sensor 110 of a module 102 by the reflective surface 121 (see Fig. 2) of the reflective cup 120. In other words, the reflective cup 120 can be used as a component to collect signals, enhance signal strength and improve sensing distance. After the reflective cup 120 collects the infrared rays IR and the infrared rays IR are focused on the PIR sensor 110, the signals can be amplified by the amplifier 140 of the module 102, and the signals are compared and filtered through the comparator 150 of the module 102. Finally, the signals are sent to a lamp.

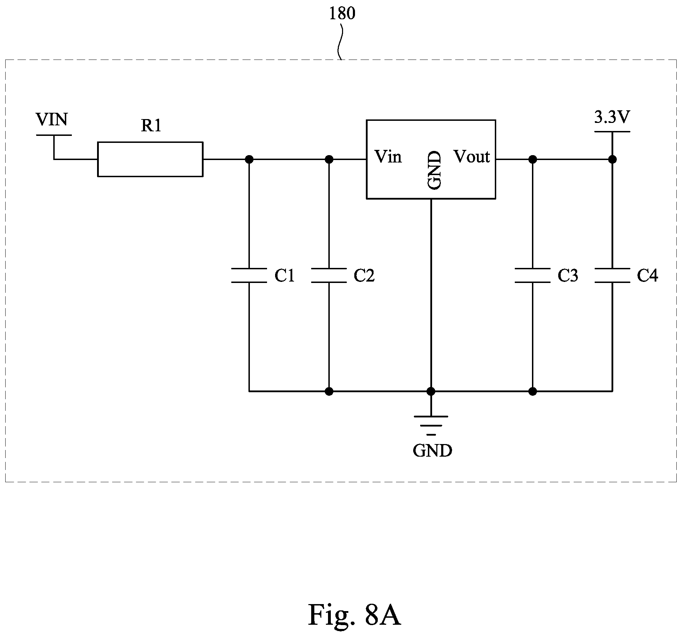

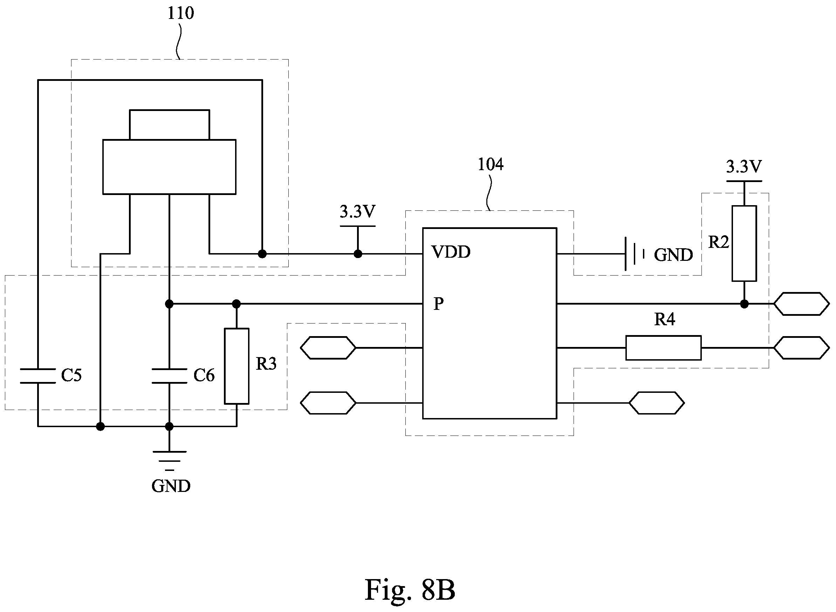

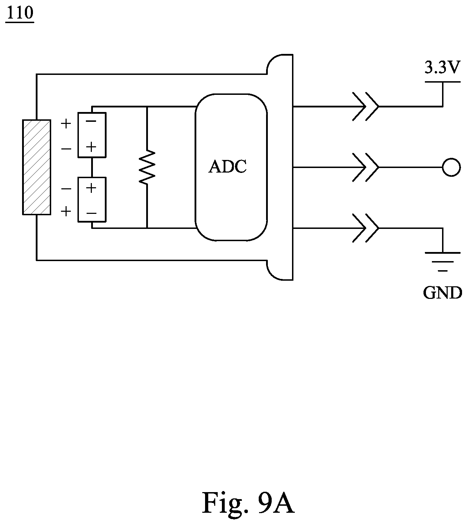

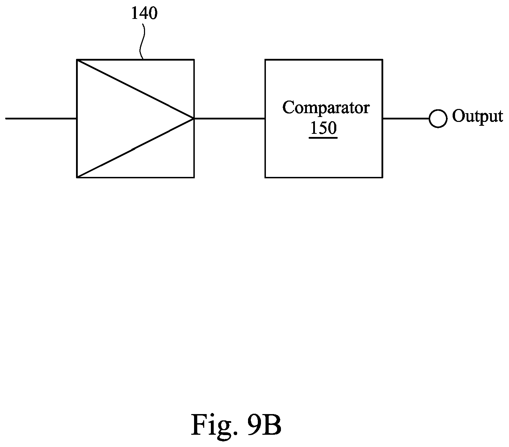

Fig. 8A is a circuit diagram of a voltage stabilized power supply circuit 180 according to one embodiment of the present disclosure. Fig. 8B is a circuit diagram of the PIR sensor 110 and a microcontroller unit (MCU) 104 according to one embodiment of the present disclosure. As shown in Fig. 8A and Fig. 8B, the voltage stabilized power supply circuit 180 can provide the PIR sensor 110 and the MCU 104 power, such as the electrical connection utilizing voltage contacts 3.3V. The voltage stabilized power supply circuit 180 includes capacitors C1-C4 and a resistor R1. The MCU 104 includes capacitors C5 and C6 and resistors R2-R4. When a voltage passes through the resistor R1 of the voltage stabilized power supply circuit 180 to limit a current, electric energy can be stored by the capacitors C1 and C2, which ensures that output voltage remains stable when the voltage of power fluctuates, and high-frequency noise in the circuit can be filtered out to purify the quality of the voltage. Moreover, the capacitors C3 and C4 storing electric energy can ensure that output voltage remains stable when the voltage of power fluctuates, which facilitates to reduce the ripple voltage of the circuit, improve the stabilization effect of voltage, and effectively smooth voltage fluctuations in the circuit, thereby obviously reducing the voltage fluctuations at output ports to improve the stability of the voltage regulator. The PIR sensor 110 is a digital pyroelectric sensor, and its detailed circuit diagram is shown in Fig. 9A. The PIR sensor 110 has a converter ADC capable of converting a heat signal (infrared radiation) into a digital signal. The MCU 104 is electrically connected to PIR sensor 110 through the voltage contact 3.3V and a contact P. The MCU 104 may include the components of Fig. 9B, such as the amplifier 140 and the comparator 150, to process the digital signal from the converter ADC.

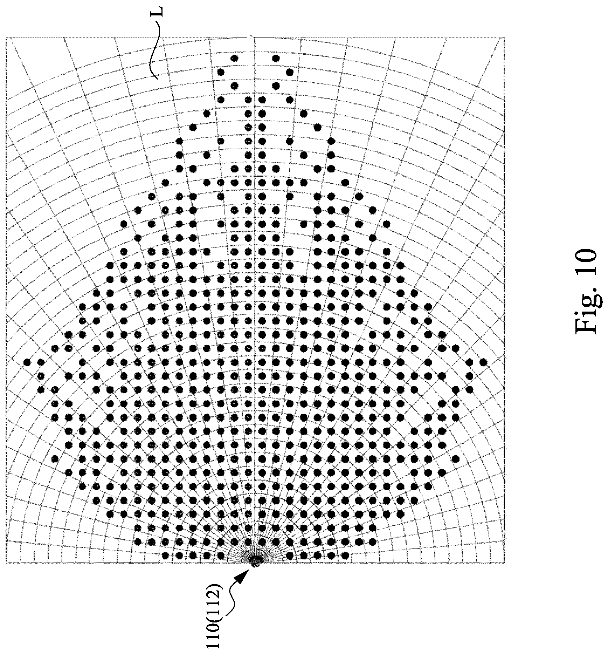

Fig. 10 is a distance detection data distribution map of the long distance PIR sensing device 100 of Figs. 1 and 2. The horizontal axis of Fig. 10 is distance, and the positon of a dotted line L is 35 meters away from the rectangular sensing area 112 of the PIR sensor 110. By the design of the aforementioned long distance PIR sensing device 100 having the reflective cup 120, the PIR sensor 110 of the long distance PIR sensing device 100 can electively increase a sensing distance to more than 35 meters, such as data points on the right side of the dotted line L.

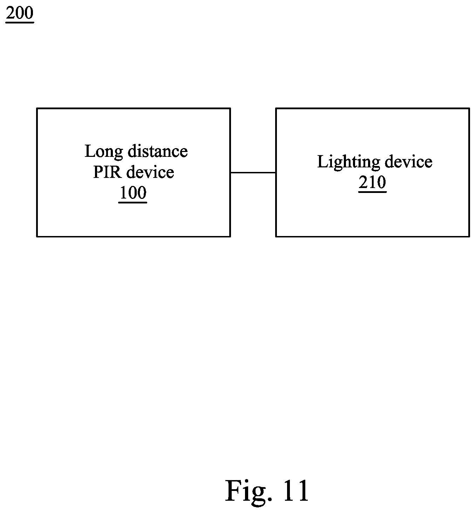

Fig. 11 is a block diagram of a lighting system 200 according to one embodiment of the present disclosure. The lighting system 200 uses the aforementioned long distance PIR sensing device 100. For example, the lighting system 200 includes a lighting device 210 and the long distance PIR sensing device 100, and the lighting device 210 is electrically connected to the long distance PIR sensing device 100. The lighting device 210 is an LED light source, for example. When the long distance PIR sensing device 100 receives infrared radiation from a human body, the lighting device 210 can emit light.

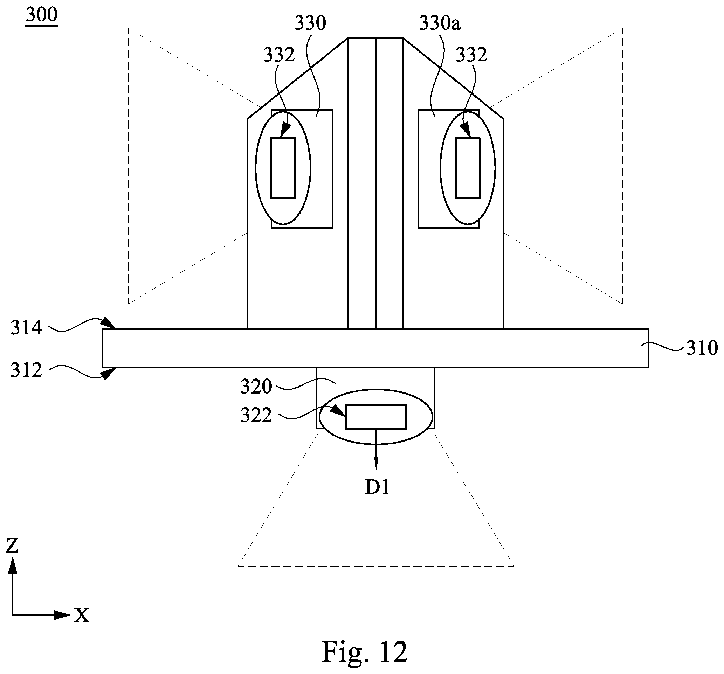

Fig. 12 is a perspective view of an ultra wide angle PIR sensing device 300 according to another embodiment of the present disclosure, in which the Fresnel lens 340 (see Fig. 1) and the casing are removed. The ultra wide angle PIR sensing device 300 includes a first PIR sensor 320 and two second PIR sensors 330 and 330a, such that the long distance PIR sensing device 100 of Fig. 1 has ultra wide angle function to become the ultra wide angle PIR sensing device 300. In other words, the long distance PIR sensing device 100 (i.e., the ultra wide angle PIR sensing device 300) has three PIR sensors including the first PIR sensor 320 and the two second PIR sensors 330 and 330a. As shown in Fig. 1 and Fig. 12, the ultra wide angle PIR sensing device 300 includes a printed circuit board 310, the first PIR sensor 320, the two second PIR sensors 330 and 330a, and the Fresnel lens 340. The Fresnel lens 340 covers the printed circuit board 310, the first PIR sensor 320, and the second PIR sensors 330 and 330a. The printed circuit board 310 has a first surface 312 and a second surface 314 opposite to the first surface 312. The first PIR sensor 320 is located on the first surface 312 of the printed circuit board 310, and has a first sensing area 322. The two second PIR sensors 330 and 330a are located on the second surface 314 of the printed circuit board 310 and adjacent to each other. For example, each of the second PIR sensors 330 and 330a may have a vertical board, and the two vertical boards of the second PIR sensors 330 and 330a abut against each other. Each of the second PIR sensors 330 and 330a has a second sensing area 332. When infrared rays passes through the Fresnel lens 340 to enter the ultra wide angle PIR sensing device 300, the first sensing area 322 of the first PIR sensor 320 and the second sensing areas 332 of the second PIR sensors 330 and 330a can receive the infrared rays.

A human body has a body temperature generally about 37 degrees, so the human body can emit infrared rays with a wavelength of about 10µm. After the infrared rays passes through the Fresnel lens 340 to enhance, the infrared rays may be reflected to the first PIR sensor 320 and the second PIR sensors 330 and 330a. The first PIR sensor 320 and the second PIR sensors 330 and 330a are pyroelectric elements that are sensitive to infrared radiation with the wavelength of 10µm. The first PIR sensor 320 and the second PIR sensors 330 and 330a lose charge balance when receiving the infrared radiation of the human body to change temperature, thereby releasing charges to the outside. Therefore, the subsequent circuit after detection and processing can generate a signal.

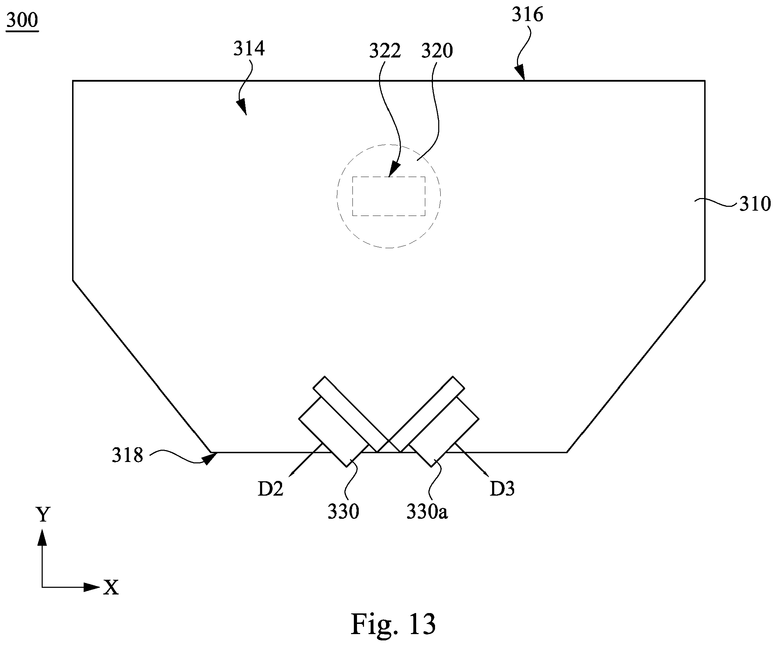

Fig. 13 is a top view of the ultra wide angle PIR sensing device 300 of Fig. 12. As shown in Fig. 12 and Fig. 13, a normal direction D1 of the first sensing area 322 of the first PIR sensor 320, a normal direction D2 of the second sensing area 332 of the second PIR sensor 330, and a normal direction D3 of the second sensing area 332 of the second PIR sensor 330a are different from each other. Such a configuration can effectively improve the range of entire sensing angle. In some embodiments, the normal direction D1 of the first sensing area 322 may be perpendicular to the printed circuit board 310. The two normal directions D2 and D3 of the two second sensing areas 332 are parallel to the printed circuit board 310. Furthermore, the normal direction D1 of the first sensing area 322 of the first PIR sensor 320 may be perpendicular to the two normal directions D2 and D3 of the two second sensing areas 332, and the two normal directions D2 and D3 of the two second sensing areas 332 may be perpendicular to each other. As a result, the normal direction D1 of the first sensing area 322 and the two normal directions D2 and D3 of the two second sensing areas 332 are respectively toward the bottom, left front and right front of the ultra wide angle PIR sensing device 300 of Fig. 1.

In some embodiments, the printed circuit board 310 has a first edge 316 and a second edge 318 opposite to the first edge 316, and the first PIR sensor 320 is closer to the first edge 316 of the printed circuit board 310 than the second PIR sensors 330 and 330a. The second PIR sensors 330 and 330a are adjacent to the second edge 318 of the printed circuit board 310.

In addition, each of the first sensing area 322 and the second sensing areas 332 may be a rectangle, the long side of the rectangle can detect the angle range of about 138 degrees, and the short side of the rectangle can detect the angle range of about 125 degrees, but the present disclosure is not limited in this regard.

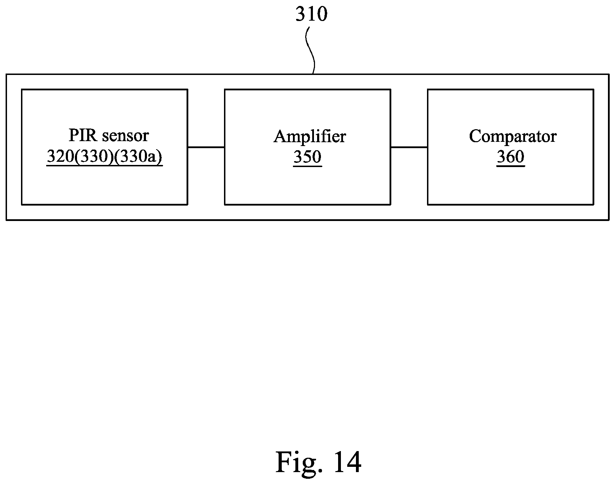

Fig. 14 is a block diagram of the ultra wide angle PIR sensing device 300 of Fig. 12. As shown in Fig. 12 and Fig. 14, the ultra wide angle PIR sensing device 300 further includes at least one amplifier 350 and at least one comparator 360. The amplifier 350 is located on the printed circuit board 310 and electrically connected to one of the first PIR sensor 320 and the second PIR sensors 330 and 330a. The comparator 360 is located on the printed circuit board 310 and electrically connected to the amplifier 350. Infrared rays can be received by the first PIR sensor 320 and the second PIR sensors 330 and 330a, and the amplifier 350 is utilized to amplify signals and the comparator 360 is utilized to perform signal comparison and filtering, thereby sending signals that can be received by a lamp.

It is to be noted that the connection relationships, the materials, and the advantages of the elements described above will not be repeated in the following description. In the following description, signal transmission sequence and circuits when the ultra wide angle PIR sensing device 300 is in operation will be explained.

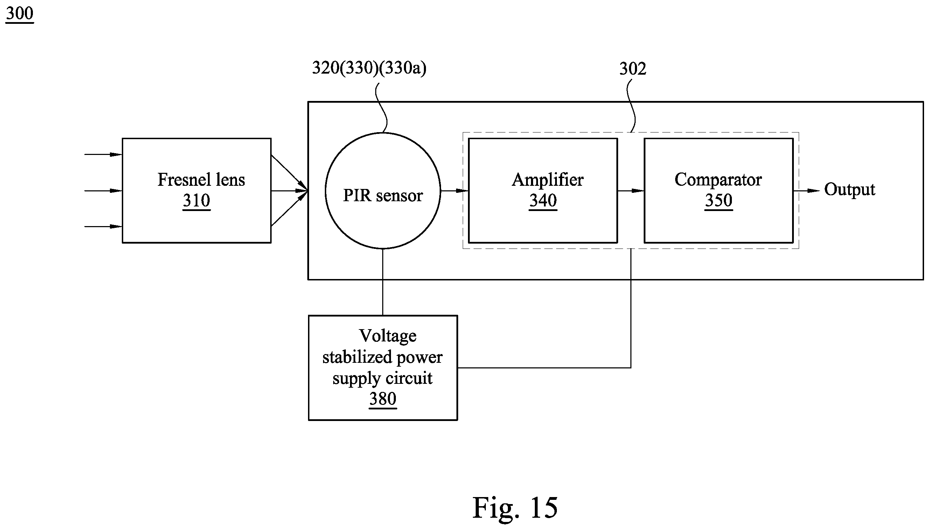

Fig. 15 is a schematic view of signal transmission when the ultra wide angle PIR sensing device 300 of Figs. 1 and 12 is in use. First, the infrared rays with the wavelength of about 10µm may be formed by a human body, and then the infrared rays pass through the Fresnel lens 340 of Fig. 1 to reduce the interference from ambient light, thereby enhancing thermal radiation signals (i.e., the infrared rays) and refracting the thermal radiation signals to the first PIR sensor 320 and the second PIR sensors 330 and 330a. Since the first PIR sensor 320 of the ultra wide angle PIR sensing device 300 is located on the first surface 312 (see Fig. 12) of the printed circuit board 310, the second PIR sensors 330 and 330a are located on the second surface 314 (see Fig. 12), and the normal direction D1 of the first sensing area 322 of Fig. 12 and the normal directions D2 and D3 of the second sensing areas 332 of Fig. 13 are different, when the human body emits the infrared rays with the wavelength of about 10um, even if the human body is tilted relative to the ultra wide angle PIR sensing device 300 (e.g., greater than 180 degrees), the infrared rays can still be received by any one of the first PIR sensor 320 and the second PIR sensors 330 and 330a. After the first PIR sensor 320 and the second PIR sensors 330 and 330a receive the infrared rays, the signals can be amplified by the amplifier 350, and the signals are compared and filtered through the comparator 360. Finally, the signals are sent to a lamp.

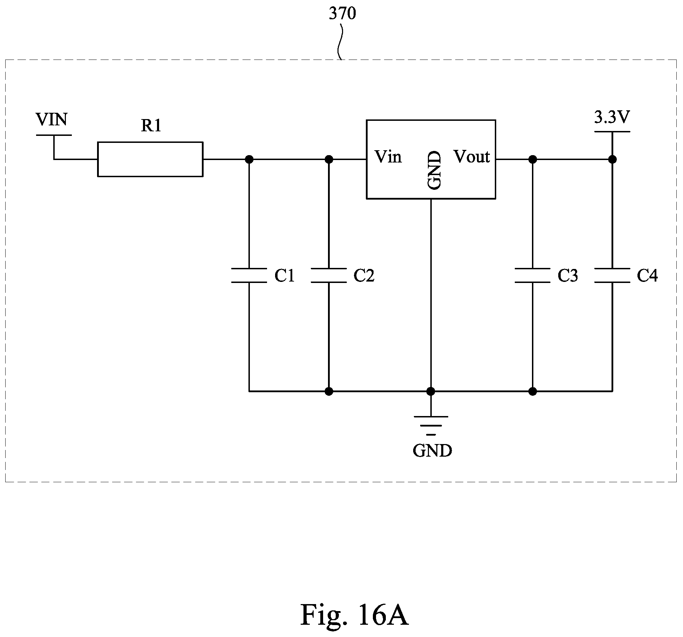

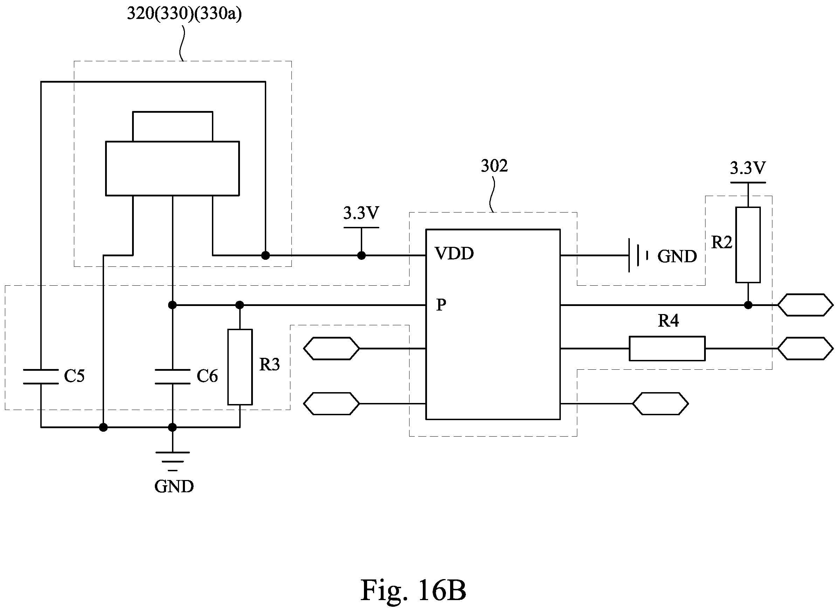

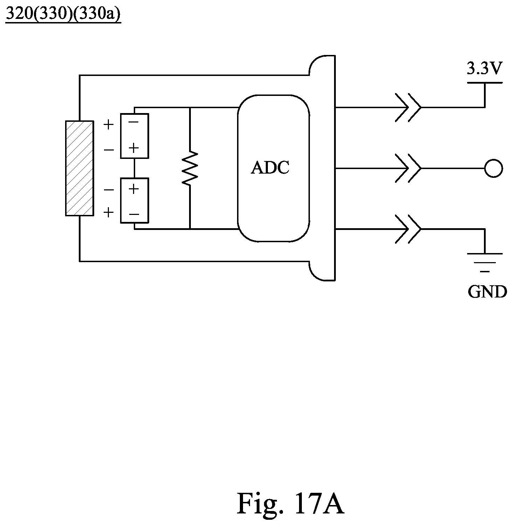

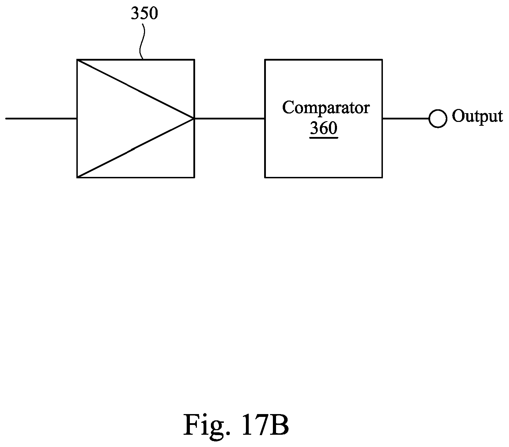

Fig. 16A is a circuit diagram of a voltage stabilized power supply circuit 370 according to one embodiment of the present disclosure. Fig. 16B is a circuit diagram of the first PIR sensor 320, the second PIR sensors 330 and 330a, and a microcontroller unit (MCU) 302 according to one embodiment of the present disclosure. As shown in Fig. 16A and Fig. 16B, the voltage stabilized power supply circuit 370 can provide the first PIR sensor 320, the second PIR sensors 330 and 330a, and the MCU 302 power, such as the electrical connection utilizing the voltage contacts 3.3V. The voltage stabilized power supply circuit 370 includes the capacitors C1-C4 and the resistor R1. The MCU 302 includes the capacitors C5 and C6 and the resistors R2-R4. When a voltage passes through the resistor R1 of the voltage stabilized power supply circuit 370 to limit a current, electric energy can be stored by the capacitors C1 and C2, which ensures that output voltage remains stable when the voltage of power fluctuates, and high-frequency noise in the circuit can be filtered out to purify the quality of the voltage. Moreover, the capacitors C3 and C4 storing electric energy can ensure that output voltage remains stable when the voltage of power fluctuates, which facilitates to reduce the ripple voltage of the circuit, improve the stabilization effect of voltage, and effectively smooth voltage fluctuations in the circuit, thereby obviously reducing the voltage fluctuations at output ports to improve the stability of the voltage regulator. The first PIR sensor 320 and the second PIR sensors 330 and 330a are digital pyroelectric sensors, and their detailed circuit diagram is shown in Fig. 17A. Each of the first PIR sensor 320 and the second PIR sensors 330 and 330a has a converter ADC capable of converting a heat signal (infrared radiation) into a digital signal. The MCU 302 is electrically connected to one of the first PIR sensor 320 and the second PIR sensors 330 and 330a through the voltage contact 3.3V and the contact P. The MCU 302 may include the components of Fig. 17B, such as the amplifier 350 and the comparator 360, to process the digital signal from the converter ADC.

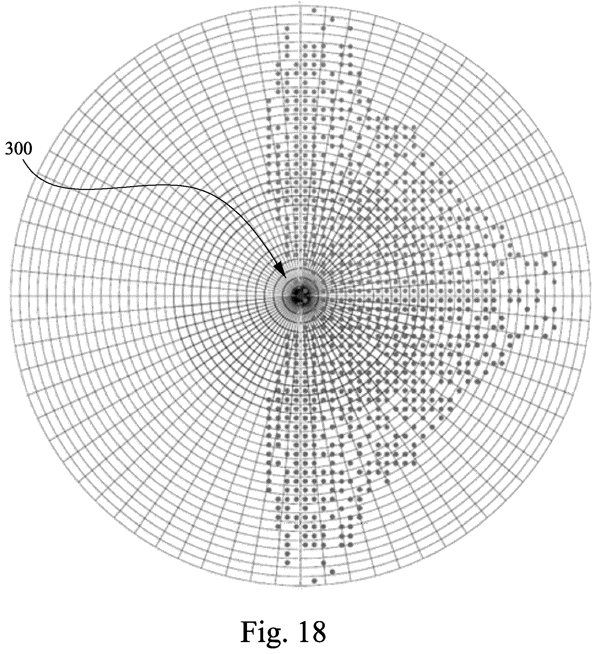

Fig. 18 is an angle detection data distribution map of the ultra wide angle PIR sensing device 300 of Figs. 1 and 12. In Fig. 18, an angle difference between two adjacent straight lines along radial directions is 5 degrees. By the design of the aforementioned ultra wide angle PIR sensing device 300 having the first PIR sensor 320 and the second PIR sensors 330 and 330a, the ultra wide angle PIR sensing device 300 can electively improve a sensing angle to more than 220 degrees, such as some data points on the left side of Fig. 18.

## Claims

1. A long distance passive infrared (PIR) sensing device, comprising:
a passive infrared (PIR) sensor (110);
an amplifier (140) electrically connected to the PIR sensor (110);
a comparator (150) electrically connected to the amplifier (140); and
a reflective cup (120) adjacent to the PIR sensor (110), wherein an outer surface of the reflective cup (120) is a reflective surface, and the reflective surface of the reflective cup (120) is configured to reflect infrared rays to the PIR sensor (110).

2. The long distance PIR sensing device of claim 1, further comprising:
a Fresnel lens (130) covering the PIR sensor (110) and the reflective cup (120).

3. The long distance PIR sensing device of any one of claims 1-2, further comprising:
a printed circuit board (160), wherein the PIR sensor (110), the amplifier (140), and the comparator (150) are located on the printed circuit board (160).

4. The long distance PIR sensing device of claim 3, further comprising:
a cover (170) covering the printed circuit board (160) and having a signal output port, wherein the PIR sensor (110) outputs a signal from the signal output port.

5. The long distance PIR sensing device of claim 4, wherein the reflective cup (120) is located on the cover (170), and a bottom of the reflective cup (120) is adjacent to the PIR sensor (110).

6. The long distance PIR sensing device of claim 5, wherein the bottom of the reflective cup (120) is located between an opening of the reflective cup (120) and the PIR sensor (110).

7. The long distance PIR sensing device of any one of claims 5-6, wherein the reflective cup (120) has two sidewalls opposite to each other and extending from the bottom of the reflective cup (120), and an obtuse angle is formed between each of the two sidewalls and the bottom of the reflective cup (120).

8. The long distance PIR sensing device of any one of claims 1-7, wherein the PIR sensor (110) has a rectangular sensing area (112).

9. The long distance PIR sensing device of claim 8, wherein a long side of the rectangular sensing area (112) is parallel to a radial direction of the reflective cup (120).

10. The long distance PIR sensing device of any one of claims 8-9, wherein a short side of the rectangular sensing area (112) is parallel to an axial direction of the reflective cup (120).

11. The long distance PIR sensing device of claim 1, wherein the PIR sensor (110) is a first PIR sensor (320), the long distance PIR sensing device further comprises two second PIR sensors (330 and 330a) and a printed circuit board (310), the printed circuit board (310) has a first surface and a second surface opposite to the first surface, the first PIR sensor (320) is located on the first surface of the printed circuit board (310) and has a first sensing area (322), the two second PIR sensors (330 and 330a) are located on the second surface of the printed circuit board (310) and adjacent to each other, each of the two second PIR sensors (330 and 330a) has a second sensing area (332), and a normal direction of the first sensing area (322) and two normal directions of the two second sensing areas (332) are different from each other.

12. The long distance PIR sensing device of claim 11, further comprising:
a Fresnel lens (340) covering the printed circuit board (310), the first PIR sensor (320), and the two second PIR sensors (330 and 330a).

13. The long distance PIR sensing device of any one of claims 11-12, wherein the two normal directions of the two second sensing areas (332) are perpendicular to each other.

14. The long distance PIR sensing device of any one of claims 11-13, wherein the printed circuit board (310) has a first edge and a second edge opposite to the first edge, and the first PIR sensor (320) is closer to the first edge of the printed circuit board (310) than the two second PIR sensors (330 and 330a), and the two second PIR sensors (330 and 330a) are adjacent to the second edge of the printed circuit board (310).

15. A lighting system (200) using a long distance passive infrared (PIR) sensing device, wherein the lighting system (200) uses the long distance PIR sensing device of claim 1.
